# EUROPEAN PATENT SPECIFICATION

(11) **EP 1 883 186 B1**
(45) Date of publication and mention of the grant of the patent: **04.09.2013**
(21) Application number: 06291210.0
(22) Date of filing: 26.07.2006
(51) Int. Cl.: H04W 36/00

(54) **Using multiple internet protocol addresses for WIFI handover**
Anwendung mehrerer Internet-Protokoll-Adressen für WIFI-Weiterreichung
Utilisation d'une pluralité d'adresses de protocol internet pour transfert WIFI

(43) Date of publication of application: 30.01.2008
(73) Proprietor: LG ELECTRONICS INC., Yongdungpo-ku Seoul (KR)
(72) Inventor: Deprun, Jean-Francois, 75010 Paris (FR)
(74) Representative: Regimbeau

(56) References cited:
- EP-A1- 1 032 237
- EP-A1- 1 558 047
- WO-A-2004/079997
- WO-A2-2004/014007
- ANDREW KELLY, PHILIP PERRY, JOHN MURPHY: "A Modified SCTP Handover Scheme for Real Time Traffic" PROC. OF HETNETS '03 : FIRST INTERNATIONAL WORKING CONFERENCE ON PERFORMANCE MODELLING AND EVALUATION OF HETEROGENEOUS NETWORKS, July 2003 (2003-07), pages 3/1-3/8, XP002408775 http://www.cs.ucd.ie/staff/jmurphy/home/pu blications/631.pdf
- KAARANAN H ET AL: "UMTS Networks: Architecture, Mobility and Services, PASSAGE", UMTS NETWORKS. ARCHITECTURE, MOBILITY AND SERVICES, WILEY, US, 11 June 2001 (2001-06-11), pages 6-13,50, XP002404852,
- CHANG M J ET AL: "mSCTP for Soft Handover in Transport Layer", IEEE COMMUNICATIONS LETTERS, IEEE SERVICE CENTER, PISCATAWAY, NJ, US, vol. 8, no. 3, 1 March 2004 (2004-03-01), pages 189-191, XP011109561, ISSN: 1089-7798

## Description

### BACKGROUND

The present invention relates to a handover procedure between different WIFI hotspots in a wireless communication system having access terminals (e.g., mobile terminals, user equipment, etc.) and access points. More particularly, the present invention provides a way to ensure the handover between different WIFI hotspots without the need to modify the WIFI hotspot or the network by utilizing double IP addresses for WIFI handover.

The wireless LAN standard 802.11b, known also as WIFI, is undergoing great development and many networks are being installed in campuses, airports, stations, etc. In fact, WIFI can provide a wideband wireless access to the Internet by means of so called "hot spots." Nowadays, more and more WIFI hotspots are being created. These hotspots allow mobile terminals to connect to the WIFI network. Each hotspot has an area of emission and is connected to internet.

A handover occurs when a mobile station moves out from the radio coverage of an access point (i.e., a service region), and enters a new service region. During the handover, certain types of data (e.g., management frames) are exchanged between the mobile station and the access point. During this period the mobile station is not able to send or receive any data traffic. The handover procedure refers to the sequence of actions and messages exchanged by access points and a mobile station, resulting in the transfer of a connection from the original access point to the destination access point. The state information transferred typically consists of the client identification and credentials, which allow the mobile terminal to gain network access and accounting information from the new access point. The complete handover process can be divided into two different logical steps of discovery and re-authentication. Due to mobility, the signal to noise ratio perceived by a mobile terminal might degrade. When it drops below a threshold value, it triggers the station to start searching for another access point, in order to remain connected to the LAN, and initiates the handover procedure. The discovery of a new access point is performed by means of the scanning procedure, which consists in monitoring different channels for beacon signals periodically transmitted by access points. The re-authentication process typically involves an authentication and a re-association to a new access point. The re-authentication phase involves the transfer of credentials and other state information from the old access point. Generally, the handover is only possible when the hotspots overlap, to thus allow a device (i.e. mobile terminal) to be always connected to a WIFI hotspot during communication.

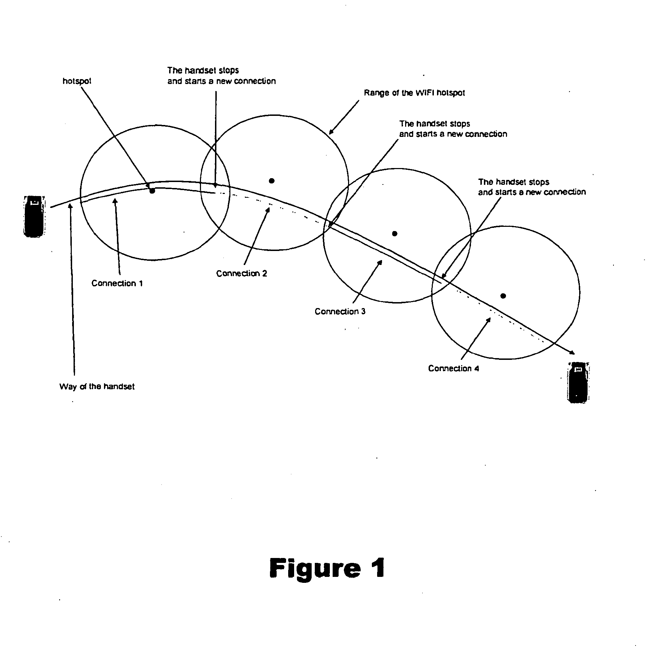

Figure 1 is an example of the classic WIFI "handover": When the WIFI device uses a different WIFI hotspot, it stops its communication to start a new one. Between this disconnection and reconnection, the transmission of data is not possible. In the example of Figure 1, the device does four connections and it stops its data transmission four times.

Therefore, the related art suffers from data transmission interruptions when the mobile terminal uses different WIFI hotspots. Namely, one of the issues in the related art is to set up multiple WIFI access points to cover a large area and how to handle the handover from one access point to another in a seamless manner with minimal inconvenience to the user. In the related art, each hotspot is separate and the mobile terminal with WIFI features cannot perform handover in an effective manner. To perform handover in an effective manner, it means that the WIFI device can start a connection in a WIFI hotspot and stop this connection in another WIFI hotspot without data transmission interruptions. If there are data disconnections during the handover process, this will penalizes the user and the operator for unsatisfied quality of audio, video, or multimedia features. However, in the related art, the WIFI hotspots cannot allow handover between themselves. When a mobile terminal performs a WIFI connection to a WIFI hotspot, it loses its last connection with the previous WIFI mobile terminal. Between each disconnection/reconnection the transmission of the data is lost and the Quality of Signal (QoS) is decreased.

Also, in related art, there is no solution to perform handover between WIFI hotspots without data transmission interruptions. The related art tries to do a classic handover between the different hotspots with the same strategy of the GSM/UMTS network. But this strategy is not possible with WIFI hotspots because each WIFI hotspot is independent and the different hotspots are not synchronized which each other.

Another example of handover is found in "mSCTP fer Sott Handover in Transport Layer, Sedi Joo Koh et al., IEEE Communications Letters, Vol 8, No. 3, March 2004.

### SUMMARY

One aspect of the present invention involves the recognition by the present inventors of the drawbacks in the related art, as explained above. Based upon such recognition, improvements to the WIFI handover method and/or system can be achieved according to the present invention.

The present invention provides a method as defined in claim 1 and an apparatus as defined in claim 6, for performing a WIFI handover for a wireless communication terminal allowing the transmission between the mobile terminal and its correspondent is never stopped, thereby enabling the WIFI handover during a voice call (and data call) without impact on the QOS.

The apparatus and method should perform a WIFI handover between different WIFI hotspots without the need to modify the WIFI hotspot or the network.

The apparatus and method should perform a WIFI handover with an increased bandwidth of the transmission between the mobile terminal and its correspondent.

To achieve at least the above objects in whole or in parts, there is provided a method of performing handover for a wireless communication terminal, comprising: connecting to one or more other communication terminals within a network via a plurality of service areas; and performing a handover using the two or more IP addresses of the terminal between the pluralities of service areas.

To achieve at least these advantages in whole or in parts, there is further provided a method for a mobile communication terminal in communication with a plurality of access points, comprising: determining a number of access points that transmitting a signal to the terminal with respect to a current location of the terminal; designating a number of internet protocol (IP) addresses for the terminal that equals the number of determined access points; and connecting to another mobile communication terminal using at least two or more designated IP addresses of the terminal.

To achieve at least these advantages in whole or in parts, there is further provided a mobile terminal for a wireless communication system, the mobile terminal comprising: a transceiver for transmitting and receiving a signal to communicate with an access point of the wireless communication system via a wireless link; a memory unit for storing information including at least two internet protocol (IP) addresses of the mobile terminal; a processor cooperating with the transceiver and the memory unit to perform, connecting to one or more other communication terminals within a network via the plurality of access points; and performing a handover using the two or more IP addresses of the terminal between the pluralities of access points.

To achieve at least these advantages in whole or in parts, there is further provided a mobile communication system, comprising: a wireless communication device; a plurality of access point for connecting a first mobile terminal with a second mobile terminal, wherein the each access point has a limited service range; a network; and a mobile communication terminal comprising, a transceiver for transmitting and receiving a signal; a memory unit for storing information including at least two internet protocol (lP) addresses of the mobile terminal; and a controller cooperating with the transceiver and the memory unit to perform, determining a corresponding internet protocol (IP) addresses of the wireless device for at least two pre-allocated IP addresses of the mobile terminal respectively; detecting a new wireless LAN (WLAN) signal when the mobile terminal is moved into a different service range of an access point; comparing the detected new WLAN signal parameter with any other WLAN signals; and connecting to the wireless device using at least two or more pre-allocated IP addresses of the mobile terminal and its corresponding IP addresses of the wireless device at certain condition based on the comparison.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. In the drawings:
FIG. 1 shows an exemplary WIFI handover process among WIFI hotspots;
FIG. 2 shows an exemplary WIFI handover process with 2 addresses IP for each device according to the present invention;
FIG. 3 is an exemplary flow chart of communicating with a new access point in a wireless communication system according to the present invention.
FIG. 4 is an exemplary flow chart of connecting a device with another device using a designated number of IP addresses according to the present invention;
FIG. 5 is an exemplary flow chart illustrating the operation of WIFI handover in first embodiment of the invention;
FIG. 6 is an exemplary flow chart illustrating the operation of WIFI handover in second embodiment of the invention;
FIG. 7 is an exemplary flow chart illustrating the operation of WIFI handover in third embodiment of the invention; and
FIG. 8 is an exemplary structure of a mobile communications terminal according to the present invention.

### DETAILED DESCRIPTION

In a wireless communications system according to the present invention, at least two IP addresses of each device and at least two IP addresses of its correspondent are known. Here, since the IP addresses of the device (i.e. mobile stations (MS), user equipment (UE), mobile terminals, PDAs, etc.) are differernt from each other, the devices may be provided with a IP address irrespective of a communications provider and may be provided with unlimited IP addresses according to the wireless commuincation system. Also, the devices in wireless communiciaotns system according to the present invention are not provided with any dedicated or speficifed types of networks, but the devices are embeded with the same software therein. Further, different WIFI access points or hotspots during a handover process are connected to the same network (i.e. Internet, Ethernet, etc). The network may be a packet-based network, such as a wireless packet communication network, or may be implemented as a wired network having one or more wireless access points, such as wireless access point. The packet network may be implemented as the Internet or a corporate Intranet. Thus, the packet network may be implemented using a TCP/IP network and may implement voice or multimedia over IP using, for instance, the Session Initiation Protocol (SIP).

Various user devices, such as personal and laptop computers, PDAs, and the like, may couple to or be in communication with the network. Such devices may include telephony and other multimedia messaging capability using, for instance, peripheral cameras, Web-cams, microphones and speakers or peripheral telephony mobile terminals.

Certain features that may be part of the WIFI handover system will not be described in much detail, merely to prevent the characteristics of the present invention from being obscured. However, such additional features may also be part of the WIFI handover system of the present invention, as would be understood by those skilled in the art.

As described above, the principle of the present invention is based on (some of) these assumptions: 1) each device has at least 2 address IPs and knows at least 2 address IPs of its correspondent, 2) the device used in present invention embeds the same or compatible software 3) the different WIFI hotspots are connected to the same Internet/Ethernet network. It should be noted that the present invention may be applied to other types of handover or similar procedures for a communication system that operates in accordance with various types of standards and technologies. Also, the devices according to the present invention may support multimedia communications, which may include various types of data and information communication that may be provided to users in a visual, audible, and/or tactile manner.

A user may be equipped with a computing or processing device, such as a personal computer, which may be implemented as a laptop computer, and a cellular telephone, according to embodiments of the present invention. The computer may include a wireless network access card or interface and a network detector. The user may also be provided with a wireless electronic device such as a wireless or cellular telephone according to embodiments of the present invention. The cellular telephone includes a wireless network controller or interface, such as a wireless packet network controller, and a cellular telephone controller or interface. The cellular telephone controller may implement any of a variety of cellular telephony protocols, including, for example, GSM, GPRS, TDMA, etc.

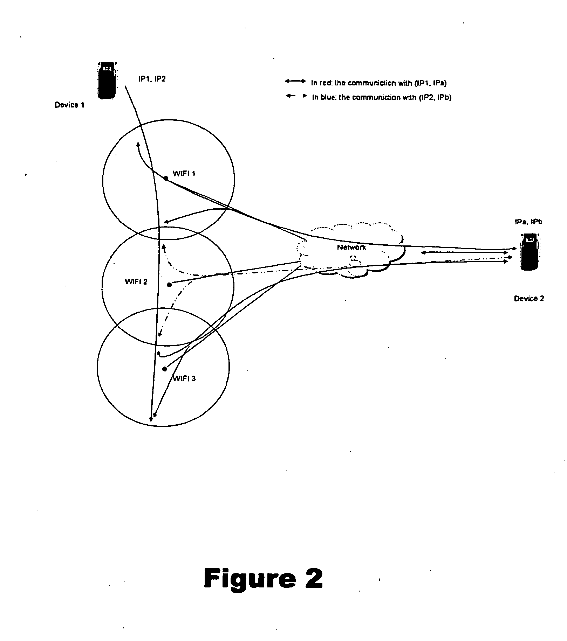

Figure 2 shows an exemplary WIFI handover process with two addresses IP for each device according to the present invention.

As depicted in Figure 2, the device 1 has the IP address IP1 and IP2. The device 2 has the IP address IPa and IPb. Each device knows the two IP address of its correspondent. In general, the IP address (Internet Protocol address) is a unique number that devices use in order to identify and communicate with each other on a computer network utilizing the internet Protocol standard (IP). Any participating network device-including routers, computers, time-servers, printers, internet fax machines, and some telephones-must have its own unique address. The IP address can also be thought of as the equivalent of a street address or a phone number for a computer or other network device on the internet. Just as each street address and phone number uniquely identifies a building or telephone, an IP address can uniquely identify a specific computer or other network device on a network. Therefore, in this case, previously known (registered) IP addresses of the device 1 and device 2 may be used during the above handover processing, or the IP addresses of the device 1 and device 2 may be assigned by a network during its communication with various manner. The device 1 starts its communication with the hotspot 1 with the IP address IP1. the device 1 knows its correspondent has the IP addresses of IPa and IPb (by the network or previous registering process between devices). Then it starts the communication with its IP1 and it calls the IP2 address of its correspondent.

During the communication between the two devices, the device 1 scans the WIFI frequencies. If it finds a new WIFI hotspot, it does a comparison between the QoS (or signal/noise or reception power) of this new WIFI hotspot (WIFI 2 in the figure 2) and the QoS (or signal/noise or reception power) of WIFI 1. When the QoS (or signal/noise or reception power) of the WIFI 2 is better than WIFI 1 QoS, the device 1 starts a new communication with its correspondent via WIFI 2 (having the better QoS). For this communication, the address IP2 and IPb are used. That means that two communications are done between the device 1 and device 2 with the two different IP address pair ((IP1, IPa) and (IP2, IPb)). During this time, the data can be sent at the same time through the two connections. When one of two connections of the communication is poor, for example, if the communication between the two devices is impossible via one of the two connections; the communication through this connection is stopped. By doing this, the handover is done. And, the communication between the two devices was never stopped. This scheduling (handover) can be done again and again with each new WIFI hotspot.

However, the handover procedures employing two or more IP addresses according to the present invention allows proper handover to be performed. Namely, the two mobile terminals can remain in proper communication without data transmission interruptions.

To describe the present invention briefly, a device 1 (mobile terminal 1) and a device 2 (mobile terminal 2) start to communicate with a pair of IP addresses (IP1 and IPa) via a WIFI 1 through a network. When the mobile terminal 1 finds a new hotspot (WIFI 2) with a better QoS or better signal-to-noise ratio or better reception power, the mobile terminals start a new communication with the other pair of IP address (IP2 and IPb) via the WIFI 2 through the network. These two data paths are used until the mobile terminal the data transmission is possible with the 2 WIFI hotspots. When one of two data paths is considered as a weak connection due to a low QoS, such data path is stopped for data transmission.

As shown in Figure 2, the present invention has little or no impact on the network. Namely, the present invention is provides a way to ensure the handover between different WIFI hotspots without the need to modify the WIFI hotspot or the network. In fact, the present invention allows data transmission (i.e. voice, data, multimedia, etc) between the devices (i.e. mobile terminals) using different WIFI hotspots without interruption by modifying only software and/or hardware implemented in the device.

The system further typically contains an authentication server of the WLAN network. The authentication server is connected to a gateway through a secured connection, which is typically a TCP/IP connection established through an operator network or through the Internet. Since the present invention concerns the cooperation of the mobile terminals and the access points, the structure of this authentication server will not be discussed here any further.

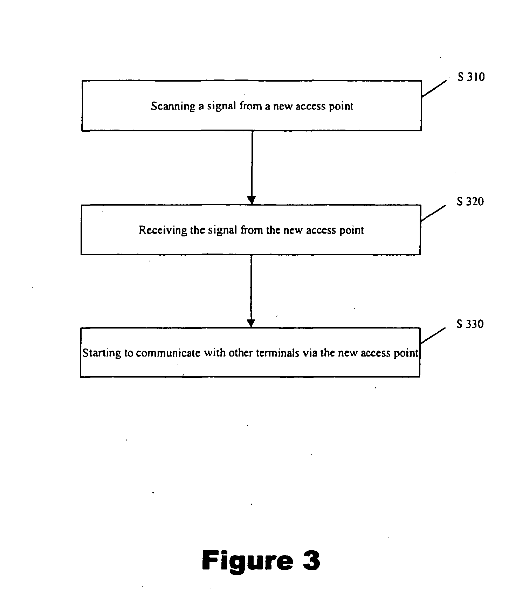

FIG. 3 is an exemplary flow chart of communicating with a new access point in a wireless communication system according to the present invention.

Initially, in a step 310, a device or mobile terminal scans a signal from a new access point. Here, in order to find an available access point, a wireless network interface of the device or mobile terminal may be equipped with an auto-detect feature. The scanning process may be performed in various ways. For example, the device or mobile terminal may set its frequency to a channel and listens to beacons from access points that use that channel. Also, the device or mobile terminal may issues a so called Probe Request for communication to the networks identified in a network list to probe the identified networks for the signal information that are associated with the device or mobile terminal. Also, a series of scans may be performed on different channels as the device or mobile terminal maintains the channel list. Here, only a subset of the channel list may be scanned to speed up the roaming process, or all channels in the channel list may be scanned.

Next, as shown in step 320, the device or mobile terminal receives a signal from the new access point. After the device or mobile terminal has received the signal from the new access point, the device or mobile terminal may compile a report for the received signal. Any suitable indicator may be used to recognize and associate the reported signal with the access point. If the received signal meets a certain condition for establishing a transmission connection via the new access point, then, as shown in step 330, the device or mobile terminal starts to communicate with other terminal through this new access point.

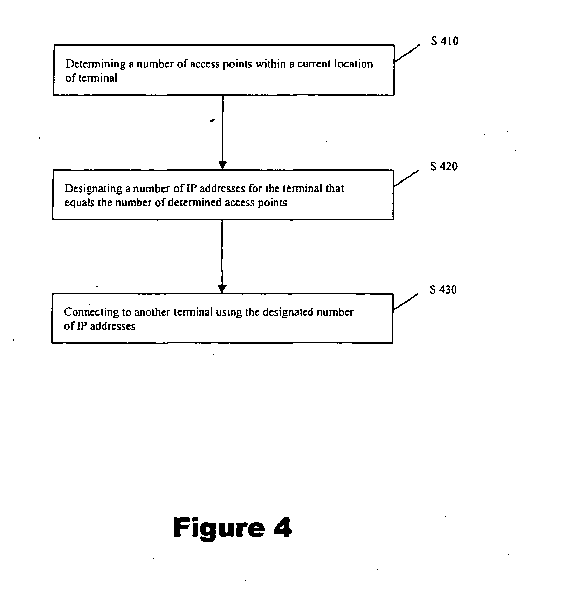

FIG. 4 is an exemplary flow chart of connecting a device with another device using a designated number of IP addresses according to the present invention.

When a device or a mobile terminal enters a network or is turned on in the network, it starts to scan through the channels, using the above described scanning methods (step 310). After that, as shown in a step 410, the device (i.e. mobile terminal) determines a number of available numbers of access points within a current location of the terminal. Namely, the terminal receives information regarding to the numbers of the access points available at the current location of the terminal. Since a quality of signal (i.e., signal strength, signal noise, signal interference, etc.) received from all access points is different from each other, the terminal determines a set of the available access points based on this quality of signals which can be calculated from its signal attributes.

For example, if a received signal from a certain access point has a lower quality of signal compared to a reference signal, this access point will not be counted as available access point in step 410. In order to find the proper number of available access points, the scanning process has to be performed whenever the new access point is detected with a function of the auto-detect feature or has to be performed for every certain time period. Also, with a setting by a user in the terminal, only a predetermined number of IP addresses can be used. For example, if the user set a maximum number of IP addresses of the terminal are three (i.e. a hardware capability of the terminal only allows to handle with three IP addresses), then only three best access points will be utilized as data transmit connections even if there are 4 available access points within the current location of the terminal. Namely, depending on the selection by the user, the terminal may continue scanning, stop searching for an access point, or select the best few number of available access points. Also, other various ways of performing the above scanning process and determining process are possible in light of the above teachings.

Once the number of access points are determined, the mobile terminal designates a number of IP address(es) for the terminal that equals to the number of determined access points, as shown in step 420. Then, the terminal can be connected with other terminals with using all or some of the designated number of IP addresses, as shown in step 430.

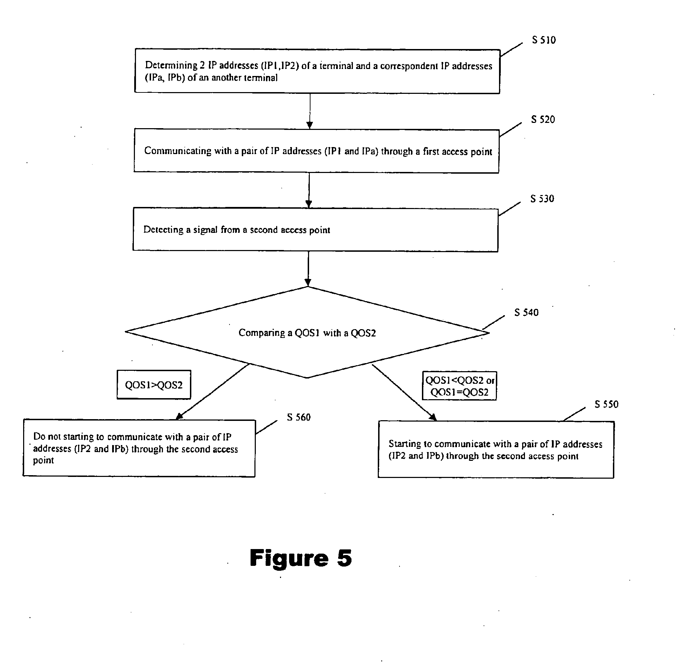

FIG. 5 is an exemplary flow chart illustrating the operation of WIFI handover in first embodiment of the invention.

First, at least two addresses of a mobile terminal (i.e. IP1, IP2) and correspondent IP addresses (i.e. IPa, IPb) of another terminal are needed to be determined (step 510). After both the terminal and another terminal's IP addresses are determined, by using the scanning process discussed previously, the terminal can communicate with the other terminal via a first access point using a pair of IP addresses (i.e. IP1, IPa) (step 520). During the communication between both the terminal and another terminal, the scanning process is performed again for any other available access point.

After the scanning process, if the terminal detects a signal from a second access point (step 530), then a quality of signal (QoS1) from the first access point is compared with a quality of signal (QoS2) from the second access point (step 540). As mentioned previously, the quality of signal may be judged by a signal noise ratio, a signal reception power, etc. If the terminal notices that the quality of signal (QoS1) from the first access point is less than or equal to the quality of signal (QoS2) from the second access point, it starts to communicate with the other pair of IP addresses (IP2, IPb) through the second access point (step 550). Thus both (IP1, IPa) and (IP2, IPb) connections are established.

This allows an increased bandwidth of a transmission between the mobile terminal and another mobile terminal because data can be transmitted or received through both connections at same time. The terminal keeps monitoring the quality of signals from the first access point and second access point, then if one of the quality of signals is less than a certain condition or if is impossible to perform the data transmission, the communication via this connection is terminated. Also, after step 540, if the terminal notices that the quality of signal (QoS1) from the first access point is better than the quality of signal (QoS2) from the second access point, the connection utilizing IP addresses of IP2 and IPb is not necessary to be established (S560), and communicating with a pair of IP address (IP2, IPb) through the second access point does not start.

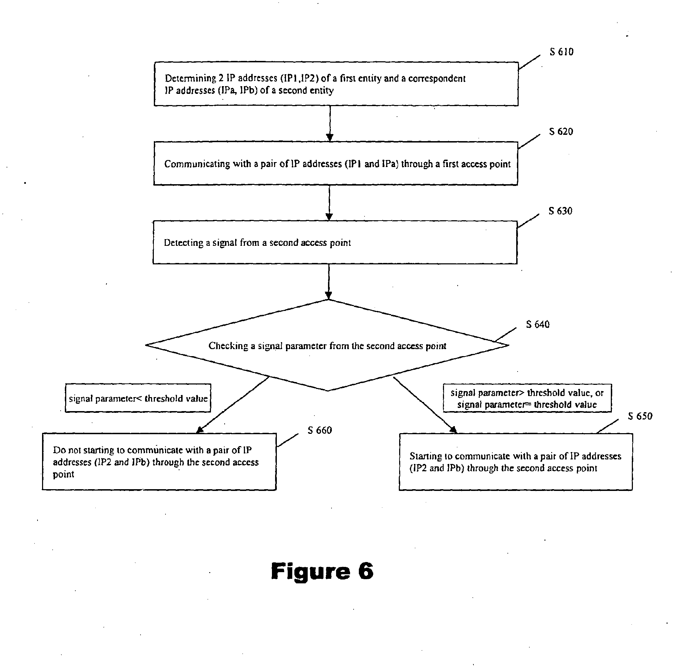

FIG. 6 is an exemplary flow chart illustrating the operation of WIFI handover in second embodiment of the invention.

As previously described, the two or more IP addresses (IP1, IP2) of a first entity and correspondent IP addresses (IPa, IPb) of a second entity are determined (step 610), then the first entity is communicated with the second entity using a pair of IP addresses (IP1, IPa) via a first access point (step 620). When any new signal is detected from a second access point during a signal scanning process performed by the first entity (step 630), the first entity checks a signal parameter which comes from the second access point (step 640).

Here, the signal parameter is being used to give an indication of the quality of signal currently experienced by the entity. Therefore, the first entity may check the signal parameter from the second access point, then compares its values with a threshold value. The signal parameter is defined by a quality of signal which may be determined by a signal noise ratio, a signal reception power, etc. After the comparing, if the signal parameter from the second access point is greater (better) than or equal to the threshold value, the first entity starts to communicate with the second entity using the other pair of IP addresses (IP2, IPb) through the second access point (step 650).

As a result, both (IP1, IPa) and (IP2, IPb) connections are established between the first entity and second entity. After monitoring the signal parameter from each access point, if one of the signal parameters is less than the threshold value, the communication via such connection is terminated immediately. Further, after step 640, if the signal parameter from the second access point is less than the threshold value, the communicating with a pair of IP address (IP2, IPb) through the second access point never starts (step 660).

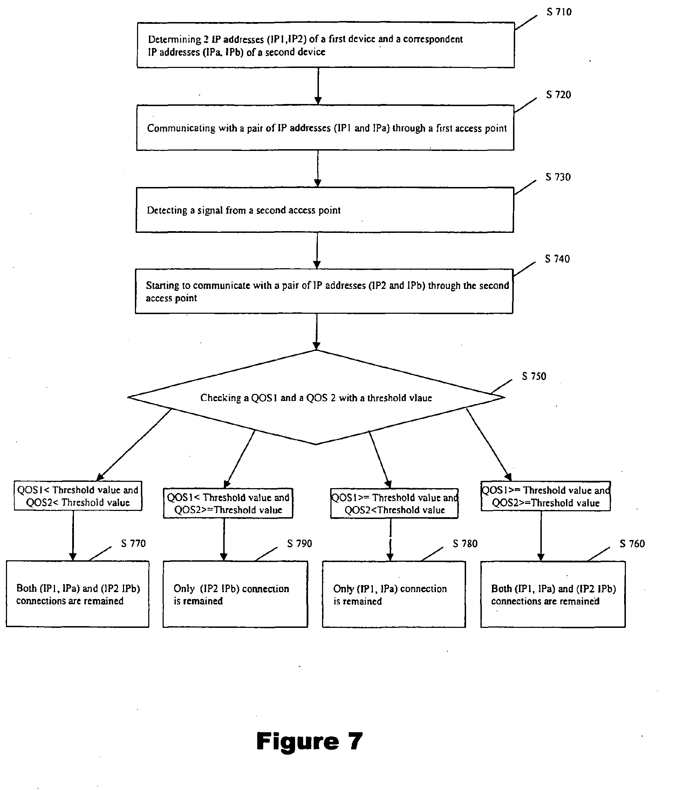

FIG. 7 is an exemplary flow chart illustrating the operation of WIFI handover in third embodiment of the invention.

Here, a first device has IP addresses of IP1 and IP2, and a second device has IP addresses of IPa and IPb. It is determined that each device knows an IP addresses of its correspondent device, which means that the first device knows the IP addresses of the second device and vice versa (step 710). Based on this determination, the first device starts to communicate with the second device using a pair of the first set of IP addresses (i.e. IP1, IPa) through a first access point (step 720).

When the first or second device finds a new access point by perform a scanning process of each device, a signal from the new access point may be detected and be analyzed (step 730). Once the detected signal meets predetermined condition for data transmission, the data starts to communicate using a second pair of IP addresses (i.e. IP2, IPb) through a second access point (step 740) while the data simultaneously communicates using the first pair of IP addresses (IP1, IPa) through the first access point as well.

After the second data transmission path is established, for every certain time period, or by a user selection, or by a predetermined setting, a QoS1 from the first access point and a QoS2 from the second access point are compared with a threshold value (step 750). Here, the threshold value may be defined by a device default setting or may be defined by a current signal condition of the device. After the comparison, if the QoS1 and the QoS2 is greater than the threshold value, both data transmission paths are remained and continuously sends/receives the data through both paths (step 760). However, if the QoS1 and the QoS2 is less than the threshold value, both data transmission paths are still remained but an alert message will be forwarded to the user for weak signaling. The alert message can be in the form of audible, visual, and/or tactile manner (step 770).

Again after the comparison, if the QoS1 is greater than or equal to the threshold value but the QoS2 is less than the threshold value, then the second data transmission path is terminated and the first data transmission path which uses the first pair of IP addresses only remains (step 780). If the QoS2 is greater than or equal to the threshold value but the QoS1 is less than the threshold value, then the first data transmission path is terminated and the second data transmission path which uses the second pair of IP addresses only remains (step 790).

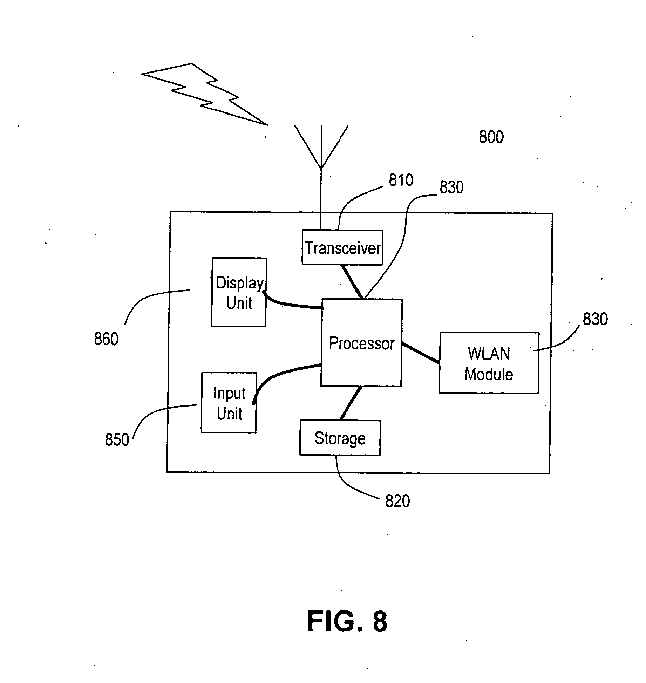

Fig 8 is an exemplary construction view showing a mobile communications terminal according to the present invention.

As shown, the mobile communications terminal 800 comprises a transceiver 810 for transmitting and receiving a signal to communicate with an access point of the wireless communication system via a wireless link (Wi-Fi, Wi-MAX, Wi-bro, etc.) and the like; a storage unit 820 for storing information including at least two or more internet protocol addresses of the mobile terminal and other devices; a processor 830 for performing a handover for a wireless communication terminal using the two or more IP addresses of the terminal between the pluralities of access points, and designating a number of internet protocol (IP) addresses that equals the total number of determined access points; an input unit 860 for receiving user commands, and a display unit 850 for display a user interface for various functions and services through the access point of the wireless communication system.

Here, it can be understood that the storage unit 820 may comprise various types of memory means, such as RAMs, ROMs, hard disk type memories, Flash memories, etc.

Also, it can be understood that the display unit 850 may be implemented by using various types of displays. Examples may include liquid crystal display (LCD) screens, organic electro-luminescence (EL) display screens, light emitting diode LED screens, organic LEDs (OLED) screen, plasma display screens, etc. Instead of the display unit 850, any other output unit can be implemented to provide audible, visual, and/or tactile outputs for various functions and services through the access point of the wireless communication system.

As can be understood, other components exist within a mobile communications terminal, but such will not be discussed in detail to prevent the characteristics of the present invention from being obscured.

The present invention provides a method of performing handover for a wireless communication terminal, comprising: connecting to one or more other communication terminals within a network via a plurality of service areas (i.e. hotspots); and performing a handover using the two or more IP addresses of the terminal between the plurality of service areas when the terminal and other terminals contain respectively compatible software and the other terminals have two or more IP addresses that correspond with the two or more allocated IP addresses of the terminal. The terminal may start to communicate with the other terminals using two or more IP addresses of the terminal and its corresponding IP addresses of the other terminals when the terminal receives a signal from a new service area and/or when the terminal moves to a neighboring service area.

It can be said that the present invention provides a method for a mobile communication terminal in communication with a plurality of access points, comprising: determining a number of other terminals or access points that transmitting a signal to the terminal with respect to a current location of the terminal; designating a number of internet protocol (IP) addresses for the terminal that equals the number of determined other terminals or access points; and connecting to another mobile communication terminal using at least two or more designated IP addresses of the terminal, thereby allowing increased bandwidth of a transmission between the mobile terminal and another mobile terminal. Here, a network assigns the IP addresses for the terminal after the designating.

It can be also said that the present invention provides a mobile terminal for a wireless communication system, the mobile terminal comprising: a transceiver for transmitting and receiving a signal to communicate with an access point of the wireless communication system via a wireless link; a memory unit for storing information including at least two internet protocol (IP) addresses of the mobile terminal; a processor cooperating with the transceiver and the memory unit to perform, connecting to one or more other communication terminals (i.e., mobile terminal, PDA, PC, etc.) within a network via the plurality of access points; and performing a handover using the two or more IP addresses of the terminal between the plurality of access points.

Here, the processor may perform a WIFI handover by determining a total number of other terminals or access points that is communicated or connected to the terminal with respect to a current location of the terminal and designating a number of internet protocol (IP) addresses that equals the total number of determined other terminals or access points.

It can be also said that the present invention provides a network for a wireless communication system, the network comprising: a transceiver for transmitting and receiving a signal via a wireless link; and a controller cooperating with the transceiver to perform, receiving a signal from a terminal to allocate Internet Protocol (IP) addresses for the terminal; determining a total number of IP addresses that is used to perform a handover between a plurality of access points or terminals; assigning the IP addresses for the total number of IP addresses of the terminal after the determining; and sending the all assigned IP addresses to the terminal.

The present invention also provides a mobile communication system, comprising: a wireless communication device; a plurality of access point for connecting a first mobile terminal with a second mobile terminal, wherein the each access point has a limited service range; a network; and a mobile communication terminal comprising, a transceiver for transmitting and receiving a signal; a memory unit for storing information including at least two internet protocol (IP) addresses of the mobile terminal; and a controller cooperating with the transceiver and the memory unit to perform, determining a corresponding internet protocol (IP) addresses of the wireless device for at least two pre-allocated IP addresses of the mobile terminal respectively; detecting a new wireless LAN (WLAN) signal when the mobile terminal is moved into a different service range of an access point; comparing the detected new WLAN signal parameter with any other WLAN signals; and connecting to the wireless device using at least two or more pre-allocated IP addresses of the mobile terminal and its corresponding IP addresses of the wireless device at certain condition based on the comparison.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of performing a handover for a wireless communication terminal, comprising:
determining first and second corresponding internet protocol, IP, addresses, IPa, IPb, of another terminal for first and second pre-allocated IP addresses, IP1, IP2, of the mobile communication terminal respectively when the mobile terminal communicates with the another terminal via a first access point;
automatically detecting a new wireless LAN, WLAN, signal if the mobile terminal Is located in the range of a second access point, wherein the new WLAN signal is detected by performing a scanning process, wherein the scanning process is performed for a subset of a channel list of the mobile communication terminal;
comparing a WLAN signal parameter related to a signal-to-noise ratio from a first access point and a detected new WLAN signal parameter related to a signal-to-noise ratio from the second access point with a threshold value stored in the mobile terminal, wherein the threshold value is defined by a current signal condition of the mobile terminal; and
after comparing step,
If the WLAN signal parameter related to the signal-to-noise ratio from the first access point and the detected new WLAN signal parameter related to the signal-to-noise ratio from the second access point are greater than the threshold value, connecting to the another terminal using both a first pair of IP addresses through the first access point and a second pair of IP addresses through the second access point, wherein the first pair of IP addresses consists of the first pre-allocated IP address of the mobile communication terminal with the first corresponding IP address of the another terminal, and the second pair of IP addresses consists of the second pre-allocated IP address of the mobile communication terminal with the second corresponding IP address of the another terminal;
if the WLAN signal parameter related to the signal-to-noise ratio from the first access point and the detected new WLAN signal parameter related to the signal-to-noise ratio from the second access point are leas than the threshold value, connecting to the another terminal using both the first pair of IP addresses through the first access point and the second pair of IP addresses through the second access point while displaying an alert message;
if the WLAN signal parameter related to the signal-to-noise ratio from the first access point is greater than or equal to the threshold value and the detected new WLAN signal parameter related to the signal-to-noise ratio from the second access point is less than the threshold value, connecting to the another terminal using only the first pair of IP addresses through the first access point and terminating a connection of the second pair of IP addresses through the second access point; and
if the WLAN signal parameter related to the signal-to-noise ratio from the first access point is less than the threshold value and the detected new WLAN signal parameter related to the signal-to-noise ratio from the second access point is greater than or equal to the threshold value, connecting to the another terminal using only the second pair of IP addresses through the second access point and terminating a connection of the first pair of IP addresses through the first access point.

2. The method of claim 1, wherein the mobile terminal and another terminal are communicating using the first IP address of the mobile terminal and the corresponding IP address of the another terminal during the detecting the new WLAN signal.

3. The method of claim 1, further comprising: monitoring the WLAN signal parameter from the first access point.

4. The method of claim 1, wherein another terminal is at least one of a handset, PDA, and PC.

5. The method of claim 1, wherein the each access point being capable of connecting the mobile terminals to a network within a service area of the access point.

6. A mobile terminal for a wireless communication system, the mobile terminal comprising:
a transceiver for transmitting and receiving a signal to communicate with an access point of the wireless communication system via a wireless link;
a memory unit for storing information including at least two internet protocol, IP, addresses of the mobile terminal;
a processor cooperating with the transceiver and the memory unit to perform,
determining first and second corresponding internet protocol, IP, addresses, IPa, IPb, of an another terminal for first and second pre-allocated IP addresses, IP1, IP2, of the mobile communication terminal respectively when the mobile terminal communicates with the another terminal via a first access point;
automatically detecting a new wireless LAN, WLAN, signal if the mobile terminal is located in the range of a second access point, wherein the new WLAN signal is detected by performing a scanning process, wherein the scanning process is performed for a subset of a channel list of the mobile communication terminal;
comparing a WLAN signal parameter related to a signal-to-noise ratio from the first access point and a detected new WLAN signal parameter related to a signal-to-noise ratio from the second access point with a threshold value stored In the mobile terminal, wherein the threshold value is defined by a current signal condition of the mobile terminal; and
after comparing step,
if the WLAN signal parameter related to the signal-to-noise ratio from the first access point and the detected new WLAN signal parameter related to the signal-to-noise ratio from the second access point are greater than the threshold value, connecting to the another terminal using both a first pair of IP addresses through the first access point and a second pair of IP addresses through the second access point, wherein the first pair of IP addresses consists of the first pre-allocated IP address of the mobile communication terminal with the first corresponding IP address of the another terminal and the second pair of IP addresses consists of the second pre-allocated IP address of the mobile communication terminal with the second corresponding IP address of the another terminal;
if the WLAN signal parameter related to the signal-to-noise ratio from the first access point and the detected new WLAN signal parameter related to the signal-to-noise ratio from the second access point are less than the threshold value, connecting to the another terminal using both the first pair of IP addresses through the first access point and the second pair of IP addresses through the second access point while displaying an alert message;
if the WLAN signal parameter related to the signal-to-noise ratio from the first access point is greater than or equal to the threshold value and the detected new WLAN signal parameter related to the signal-to-noise ratio from the second access point is lose than the threshold value, connecting to the another terminal using only the first pair of IP addresses through the first access point and terminating a connection of the second pair of IP addresses through the second access point; and
if the WLAN signal parameter related to the signal-to-noise ratio from the first access point is less than the threshold value and the detected new WLAN signal parameter related to the signal-to-noise ratio from the second access point is greater than or equal to the threshold value, connecting to the another terminal using only the second pair of IP addresses through the second access point and terminating a connection of a first pair of IP addresses through the first access point.

7. The mobile terminal of claim 6, wherein the mobile terminal and another terminal are communicating using the first IP address of the mobile terminal and the corresponding IP address of the another terminal during the detecting the new WLAN signal.

8. The mobile terminal of claim 6, wherein another terminal is at least one of a handset, PDA, and PC.

9. The mobile terminal of claim 6, wherein the each access point being capable of connecting the mobile terminals to a network within a service area of the access point.

## Patentansprüche

1. Verfahren zum Durchführen einer Weiterreichung für ein drahtloses Kommunikationsendgerät, das aufweist:
Bestimmen erster und zweiter entsprechender Internetprotokoll-, IP-, Adressen IPa, IPb eines anderen Endgeräts jeweils für erste und zweite vorab zugewiesene IP-Adressen IP1, IP2 des mobilen Kommunikationsendgeräts, wenn das mobile Kommunikationsendgerät mit dem anderen Endgerät über einen ersten Zugangspunkt kommuniziert;
automatisches Erfassen eines neuen drahtlosen LAN-, WLAN-, Signals, wenn das mobile Endgerät sich in der Reichweite eines zweiten Zugangspunkts befindet, wobei das neue WLAN-Signal erfasst wird, indem ein Abtastverfahren durchgeführt wird, wobei das Abtastverfahren für eine Teilmenge einer Kanalliste des mobilen Kommunikationsendgeräts durchgeführt wird;
Vergleichen eines WLAN-Signalparameters, der sich auf das Signal-Rausch-Verhältnis von einem ersten Zugangspunkt bezieht, und eines erfassten neuen WLAN-Signalparameters, der sich auf ein Signal-Rausch-Verhältnis von dem zweiten Zugangspunkt bezieht, mit einem in dem mobilen Endgerät gespeicherten Schwellwert, wobei der Schwellwert durch eine aktuelle Signalbedingung des mobilen Endgeräts definiert ist; und
nach dem Vergleichsschritt:
wenn der WLAN-Signalparameter, der sich auf das Signal-Rausch-Verhältnis von dem ersten Zugangspunkt bezieht, und der erfasste neue WLAN-Signalparameter, der sich auf das Signal-Rausch-Verhältnis von dem zweiten Zugangspunkt bezieht, größer als der Schwellwert sind, Verbinden mit dem anderen Endgerät unter Verwendung sowohl eines ersten Paars von IP-Adressen durch den ersten Zugangspunkt als auch eines zweiten Paars von IP-Adressen durch den zweiten Zugangspunkt, wobei das erste Paar von IP-Adressen aus der ersten vorab zugewiesenen IP-Adresse des mobilen Kommunikationsendgeräts mit der ersten entsprechenden IP-Adresse des anderen Endgeräts besteht, und das zweite Paar von IP-Adressen aus der zweiten vorab zugewiesenen IP-Adresse des mobilen Informationsendgeräts mit der zweiten entsprechenden IP-Adresse des anderen Endgeräts besteht;
wenn der WLAN-Signalparameter, der sich auf das Signal-Rausch-Verhältnis von dem ersten Zugangspunkt bezieht, und der erfasste neue WLAN-Signalparameter, der sich auf das Signal-Rausch-Verhältnis von dem zweiten Zugangspunkt bezieht, kleiner als der Schwellwert sind, Verbinden mit dem anderen Endgerät unter Verwendung sowohl des ersten Paars von IP-Adressen durch den ersten Zugangspunkt als auch des zweiten Paars von IP-Adressen durch den zweiten Zugangspunkt, während eine Alarmnachricht angezeigt wird;
wenn der WLAN-Signalparameter, der sich auf das Signal-Rausch-Verhältnis von dem ersten Zugangspunkt bezieht, größer oder gleich dem Schwellwert ist und der erfasste neue WLAN-Signalparameter, der sich auf das Signal-Rausch-Verhältnis von dem zweiten Zugangspunkt bezieht, kleiner als der Schwellwert ist, Verbinden mit dem anderen Endgerät unter Verwendung nur des ersten Paars von IP-Adressen durch den ersten Zugangspunkt und Beenden einer Verbindung des zweiten Paars von IP-Adressen durch den zweiten Zugangspunkt; und
wenn der WLAN-Signalparameter, der sich auf das Signal-Rausch-Verhältnis von dem ersten Zugangspunkt bezieht, kleiner als Schwellwert ist und der erfasste neue WLAN-Signalparameter, der sich auf das Signal-Rausch-Verhältnis von dem zweiten Zugangspunkt bezieht, größer oder gleich dem Schwellwert ist, Verbinden mit dem anderen Endgerät unter Verwendung nur des zweiten Paars von IP-Adressen durch den zweiten Zugangspunkt und Beenden einer Verbindung des ersten Paars von IP-Adressen durch den ersten Zugangspunkt.

2. Verfahren nach Anspruch 1, wobei das mobile Endgerät und ein anderes Endgerät während der Erfassung des neuen WLAN-Signals unter Verwendung der ersten IP-Adresse des mobilen Endgeräts und der entsprechenden IP-Adresse des anderen Endgeräts kommunizieren.

3. Verfahren nach Anspruch 1, das ferner aufweist:
Überwachen des WLAN-Signalparameters von dem ersten Zugangspunkt.

4. Verfahren nach Anspruch 1, wobei ein anderes Endgerät ein Handapparat und/oder ein PDA und/oder ein PC ist.

5. Verfahren nach Anspruch 1, wobei jeder Zugangspunkt fähig ist, die mobilen Endgeräte mit einem Netzwerk innerhalb eines Dienstbereichs des Zugangspunkts zu verbinden.

6. Mobiles Endgerät für ein drahtloses Kommunikationssystem, wobei das mobile Endgerät aufweist:
einen Transceiver zum Senden und Empfangen eines Signals zum Kommunizieren mit einem Zugangspunkt des drahtlosen Kommunikationssystems über eine drahtlose Verbindung;
eine Speichereinheit zum Speichern von Informationen einschließlich von wenigstens zwei Internetprotokoll-, IP, Adressen des mobilen Endgeräts;
einen Prozessor, der mit dem Transceiver und der Speichereinheit zusammenarbeitet, um durchzuführen:
Bestimmen erster und zweiter entsprechender Internetprotokoll-, IP-, Adressen IPa, IPb eines anderen Endgeräts jeweils für erste und zweite vorab zugewiesene IP-Adressen IP1, IP2 des mobilen Kommunikationsendgeräts, wenn das mobile Kommunikationsendgerät mit dem anderen Endgerät über einen ersten Zugangspunkt kommuniziert;
automatisches Erfassen eines neuen drahtlosen LAN-, WLAN-, Signals, wenn das mobile Endgerät sich in der Reichweite eines zweiten Zugangspunkts befindet, wobei das neue WLAN-Signal erfasst wird, indem ein Abtastverfahren durchgeführt wird, wobei das Abtastverfahren für eine Teilmenge einer Kanalliste des mobilen Kommunikationsendgeräts durchgeführt wird;
Vergleichen eines WLAN-Signalparameters, der sich auf das Signal-Rausch-Verhältnis von einem ersten Zugangspunkt bezieht, und eines erfassten neuen WLAN-Signalparameters, der sich auf ein Signal-Rausch-Verhältnis von dem zweiten Zugangspunkt bezieht, mit einem in dem mobilen Endgerät gespeicherten Schwellwert, wobei der Schwellwert durch eine aktuelle Signalbedingung des mobilen Endgeräts definiert ist; und
nach dem Vergleichsschritt:
wenn der WLAN-Signalparameter, der sich auf das Signal-Rausch-Verhältnis von dem ersten Zugangspunkt bezieht, und der erfasste neue WLAN-Signalparameter, der sich auf das Signal-Rausch-Verhältnis von dem zweiten Zugangspunkt bezieht, größer als der Schwellwert sind, Verbinden mit dem anderen Endgerät unter Verwendung sowohl eines ersten Paars von IP-Adressen durch den ersten Zugangspunkt als auch eines zweiten Paars von IP-Adressen durch den zweiten Zugangspunkt, wobei das erste Paar von IP-Adressen aus der ersten vorab zugewiesenen IP-Adresse des mobilen Kommunikationsendgeräts mit der ersten entsprechenden IP-Adresse des anderen Endgeräts besteht, und das zweite Paar von IP-Adressen aus der zweiten vorab zugewiesenen IP-Adresse des mobilen Informationsendgeräts mit der zweiten entsprechenden IP-Adresse des anderen Endgeräts besteht;
wenn der WLAN-Signalparameter, der sich auf das Signal-Rausch-Verhältnis von dem ersten Zugangspunkt bezieht, und der erfasste neue WLAN-Signalparameter, der sich auf das Signal-Rausch-Verhältnis von dem zweiten Zugangspunkt bezieht, kleiner als der Schwellwert sind, Verbinden mit dem anderen Endgerät unter Verwendung sowohl des ersten Paars von IP-Adressen durch den ersten Zugangspunkt als auch des zweiten Paars von IP-Adressen durch den zweiten Zugangspunkt, während eine Alarmnachricht angezeigt wird;
wenn der WLAN-Signalparameter, der sich auf das Signal-Rausch-Verhältnis von dem ersten Zugangspunkt bezieht, größer oder gleich dem Schwellwert ist und der erfasste neue WLAN-Signalparameter, der sich auf das Signal-Rausch-Verhältnis von dem zweiten Zugangspunkt bezieht, kleiner als der Schwellwert ist, Verbinden mit dem anderen Endgerät unter Verwendung nur des ersten Paars von IP-Adressen durch den ersten Zugangspunkt und Beenden einer Verbindung des zweiten Paars von IP-Adressen durch den zweiten Zugangspunkt; und
wenn der WLAN-Signalparameter, der sich auf das Signal-Rausch-Verhältnis von dem ersten Zugangspunkt bezieht, kleiner als Schwellwert ist und der erfasste neue WLAN-Signalparameter, der sich auf das Signal-Rausch-Verhältnis von dem zweiten Zugangspunkt bezieht, größer oder gleich dem Schwellwert ist, Verbinden mit dem anderen Endgerät unter Verwendung nur des zweiten Paars von IP-Adressen durch den zweiten Zugangspunkt und Beenden einer Verbindung eines ersten Paars von IP-Adressen durch den ersten Zugangspunkt.

7. Mobiles Endgerät nach Anspruch 6, wobei das mobile Endgerät und ein anderes Endgerät während der Erfassung des neuen WLAN-Signals unter Verwendung der ersten IP-Adresse des mobilen Endgeräts und der entsprechenden IP-Adresse des anderen Endgeräts kommunizieren.

8. Mobiles Endgerät nach Anspruch 6, wobei ein anderes Endgerät ein Handapparat und/oder ein PDA und/oder ein PC ist.

9. Mobiles Endgerät nach Anspruch 6, wobei jeder Zugangspunkt fähig ist, die mobilen Endgeräte mit einem Netzwerk innerhalb eines Dienstbereichs des Zugangspunkts zu verbinden.

## Revendications

1. Procédé de réalisation d'un transfert pour un terminal de communication sans fil, comprenant les étapes consistant à :
déterminer des première et seconde adresses de protocole Internet, IP, correspondantes, IPa, IPb, d'un autre terminal pour des première et seconde adresses IP pré-allouées, IP1, IP2, du terminal de communication mobile respectivement lorsque le terminal mobile communique avec l'autre terminal par le biais d'un premier point d'accès ;
détecter automatiquement un nouveau signal LAN sans fil, WLAN, si le terminal mobile se trouve dans le rayon d'un second point d'accès, dans lequel le nouveau signal WLAN est détecté en réalisant un processus de balayage, dans lequel le processus de balayage est réalisé pour un sous-ensemble d'une liste de canaux du terminal de communication mobile ;
comparer un paramètre de signal WLAN lié à un rapport signal sur bruit issu d'un premier point d'accès et un paramètre de nouveau signal WLAN détecté lié à un rapport signal sur bruit issu du second point d'accès à une valeur seuil stockée dans le terminal mobile, dans lequel la valeur seuil est définie par une condition de signal en cours du terminal mobile ; et
après l'étape de comparaison,
si le paramètre de signal WLAN lié au rapport signal sur bruit issu du premier point d'accès et le paramètre de nouveau signal WLAN détecté lié au rapport signal sur bruit issu du second point d'accès sont supérieurs à la valeur seuil, se connecter à l'autre terminal en utilisant une première paire d'adresses IP par le biais du premier point d'accès et une seconde paire d'adresses IP par le biais du second point d'accès, dans lequel la première paire d'adresses IP se compose de la première adresse IP pré-allouée du terminal de communication mobile avec la première adresse IP correspondante de l'autre terminal, et la seconde paire d'adresses IP se compose de la seconde adresse IP pré-allouée du terminal de communication mobile avec la seconde adresse IP correspondante de l'autre terminal ;
si le paramètre de signal WLAN lié au rapport signal sur bruit issu du premier point d'accès et le paramètre de nouveau signal WLAN détecté lié au rapport signal sur bruit issu du second point d'accès sont inférieurs à la valeur seuil, se connecter à l'autre terminal en utilisant la première paire d'adresses IP par le biais du premier point d'accès et la seconde paire d'adresses IP par le biais du second point d'accès tout en affichant un message d'alerte ;
si le paramètre de signal WLAN lié au rapport signal sur bruit issu du premier point d'accès est supérieur ou égal à la valeur seuil et si le paramètre de nouveau signal WLAN détecté lié au rapport signal sur bruit issu du second point d'accès est inférieur à la valeur seuil, se connecter à l'autre terminal en utilisant uniquement la première paire d'adresses IP par le biais du premier point d'accès et mettre fin à une connexion de la seconde paire d'adresses IP par le biais du second point d'accès ; et
si le paramètre de signal WLAN lié au rapport signal sur bruit issu du premier point d'accès est inférieur à la valeur seuil et si le paramètre de nouveau signal WLAN détecté lié au rapport signal sur bruit issu du second point d'accès est supérieur ou égal à la valeur seuil, se connecter à l'autre terminal en utilisant uniquement la seconde paire d'adresses IP par le biais du second point d'accès et mettre fin à une connexion de la première paire d'adresses IP par le biais du premier point d'accès.

2. Procédé selon la revendication 1, dans lequel le terminal mobile et un autre terminal communiquent en utilisant la première adresse IP du terminal mobile et l'adresse IP correspondante de l'autre terminal pendant la détection du nouveau signal WLAN.

3. Procédé selon la revendication 1, comprenant en outre : le contrôle du paramètre de signal WLAN issu du premier point d'accès.

4. Procédé selon la revendication 1, dans lequel un autre terminal est au moins un élément parmi un combiné, un PDA et un PC.

5. Procédé selon la revendication 1, dans lequel chaque point d'accès peut connecter les terminaux mobiles à un réseau dans une zone de service du point d'accès.

6. Terminal mobile pour un système de communication sans fil, le terminal mobile comprenant :
un émetteur-récepteur destiné à transmettre et à recevoir un signal pour communiquer avec un point d'accès du système de communication sans fil par le biais d'une liaison sans fil ;
une unité de mémoire destinée à stocker des informations comprenant au moins deux adresses de protocole Internet, IP, du terminal mobile ;
un processeur coopérant avec l'émetteur-récepteur et l'unité de mémoire pour,
déterminer des première et seconde adresses de protocole Internet, IP, correspondantes, IPa, IPb, d'un autre terminal pour des première et seconde adresses IP pré-allouées, IP1, IP2, du terminal de communication mobile respectivement lorsque le terminal mobile communique avec l'autre terminal par le biais d'un premier point d'accès ;
détecter automatiquement un nouveau signal LAN sans fil, WLAN, si le terminal mobile se trouve dans le rayon d'un second point d'accès, dans lequel le nouveau signal WLAN est détecté en réalisant un processus de balayage, dans lequel le processus de balayage est réalisé pour un sous-ensemble d'une liste de canaux du terminal de communication mobile ;
comparer un paramètre de signal WLAN lié à un rapport signal sur bruit issu d'un premier point d'accès et un paramètre de nouveau signal WLAN détecté lié à un rapport signal sur bruit issu du second point d'accès à une valeur seuil stockée dans le terminal mobile, dans lequel la valeur seuil est définie par une condition de signal en cours du terminal mobile ; et
après l'étape de comparaison,
si le paramètre de signal WLAN lié au rapport signal sur bruit issu du premier point d'accès et le paramètre de nouveau signal WLAN détecté lié au rapport signal sur bruit issu du second point d'accès sont supérieurs à la valeur seuil, se connecter à l'autre terminal en utilisant une première paire d'adresses IP par le biais du premier point d'accès et une seconde paire d'adresses IP par le biais du second point d'accès, dans lequel la première paire d'adresses IP se compose de la première adresse IP pré-allouée du terminal de communication mobile avec la première adresse IP correspondante de l'autre terminal, et la seconde paire d'adresses IP se compose de la seconde adresse IP pré-allouée du terminal de communication mobile avec la seconde adresse IP correspondante de l'autre terminal ;
si le paramètre de signal WLAN lié au rapport signal sur bruit issu du premier point d'accès et le paramètre de nouveau signal WLAN détecté lié au rapport signal sur bruit issu du second point d'accès sont inférieurs à la valeur seuil, se connecter à l'autre terminal en utilisant la première paire d'adresses IP par le biais du premier point d'accès et la seconde paire d'adresses IP par le biais du second point d'accès tout en affichant un message d'alerte ;
si le paramètre de signal WLAN lié au rapport signal sur bruit issu du premier point d'accès est supérieur ou égal à la valeur seuil et si le paramètre de nouveau signal WLAN détecté lié au rapport signal sur bruit issu du second point d'accès est inférieur à la valeur seuil, se connecter à l'autre terminal en utilisant uniquement la première paire d'adresses IP par le biais du premier point d'accès et mettre fin à une connexion de la seconde paire d'adresses IP par le biais du second point d'accès ; et
si le paramètre de signal WLAN lié au rapport signal sur bruit issu du premier point d'accès est inférieur à la valeur seuil et si le paramètre de nouveau signal WLAN détecté lié au rapport signal sur bruit issu du second point d'accès est supérieur ou égal à la valeur seuil, se connecter à l'autre terminal en utilisant uniquement la seconde paire d'adresses IP par le biais du second point d'accès et mettre fin à une connexion de la première paire d'adresses IP par le biais du premier point d'accès.

7. Terminal mobile selon la revendication 6, dans lequel le terminal mobile et un autre terminal communiquent en utilisant la première adresse IP du terminal mobile et l'adresse IP correspondante de l'autre terminal pendant la détection du nouveau signal WLAN.

8. Terminal mobile selon la revendication 6, dans lequel un autre terminal est au moins un élément parmi un combiné, un PDA et un PC.

9. Procédé selon la revendication 1, dans lequel chaque point d'accès peut connecter les terminaux mobiles à un réseau dans une zone de service du point d'accès.
